# FASCICULE DE BREVET EUROPEEN

(11) **EP 1 686 210 B1**
(45) Date de publication et mention de la délivrance du brevet: **06.11.2013**
(21) Numéro de dépôt: 06290166.5
(22) Date de dépôt: 27.01.2006
(51) Int. Cl.: D04H 18/00, D04H 13/00

(54) **Panneau composite, dispositif et procédé pour fabriquer un tel panneau**
Verbundplatte, Vorrichtung und Verfahren zur Herstellung
Composite panel, apparatus and process for its manufacture

(30) Priorité: 01.02.2005 FR 0500964
(43) Date de publication de la demande: 02.08.2006
(73) Titulaire: Le Roy, Guy, 75003 Paris (FR)
(72) Inventeur: Le Roy, Guy, 75003 Paris (FR)
(74) Mandataire: Pontet Allano & Associes

(56) Documents cités:
- EP-A- 0 133 119
- WO-A-01/38074
- FR-A- 2 782 528
- US-A- 5 475 904

## Description

La présente invention concerne un panneau composite.

La présente invention concerne également un dispositif pour fabriquer un tel panneau.

La présente invention concerne encore un procédé pour réaliser le panneau composite.

Les panneaux composites dits « sandwich », bien connus, comprennent deux peaux résistantes à divers efforts, placées de part et d'autre d'une âme qui est typiquement en mousse ou en feutre. Les peaux comprennent une armature fibreuse imprégnée d'une résine qui confère à ces peaux une certaine rigidité intrinsèque ainsi qu'une liaison avec l'âme.

Ces panneaux sont très répandus dans des applications où il faut réaliser des parois rigides, légères, durables, résistantes aux chocs et/ou etc.

L'âme a notamment pour fonction de maintenir une distance sensiblement fixe entre les deux peaux. En conséquence, le panneau ne peut fléchir que dans la mesure où la peau radialement extérieure (relativement à l'axe de flexion) est capable de s'étirer, et la peau radialement intérieure capable de se contracter. Comme les peaux ont une faible aptitude à s'étirer et à se contracter, le panneau est rigide en flexion.

Toutefois, les panneaux connus sont soumis au risque dit de « délamination » consistant en ce que, notamment sous un effort de flexion, l'une au moins des peaux se désolidarise de l'âme. Dans ce cas, les caractéristiques mécaniques du panneau se dégradent de manière inacceptable.

Pour remédier à cette difficulté, on a proposé de créer une liaison mécanique entre chaque peau et l'âme. On a par exemple proposé de réaliser une couture entre l'armature fibreuse de la peau et l'âme, avant l'étape d'imprégnation des peaux par la résine. De tels procédés ont une certaine efficacité, mais ils nécessitent des opérations supplémentaires avec des machines complexes et relativement lentes qui accroissent considérablement l'investissement industriel et le temps nécessaire pour la fabrication d'un panneau. Les panneaux ainsi renforcés sont donc coûteux.

On connaît par ailleurs (US 5 475 904, EP 0 133 119) des mats composites dans lesquels une âme pulvérulante ou fibreuse est stabilisée entre deux peaux par une opération d'aiguilletage traversante faisant pénétrer des fibres de ces peaux dans la matière de l'âme.

Le but de la présente invention est de proposer un panneau composite relativement économique et offrant de manière fiable des caractéristiques mécaniques améliorées.

Suivant l'invention, le panneau composite, comprenant deux peaux fibreuses, et une âme placée dans le volume intercalaire entre les peaux et reliée à celles-ci par une matière liante solidifiée, dans lequel des fibres de liaison originaires de l'une au moins des peaux ont été enfoncées, en particulier perpendiculairement, dans le volume intercalaire entre les peaux, caractérisé en ce que certaines au moins de ces fibres s'étendent dans des évidements formés dans un constituant de l'âme, en particulier des poinçonnements, des usinages ou des sillons.

Les fibres enfoncées se comportent comme un enracinement de chaque peau dans l'âme. Cet enracinement s'oppose efficacement au délaminage du panneau.

Des procédés industriels bien connus dans leur principe permettent, selon l'invention, de réaliser l'opération d'enfoncement des fibres avec des cadences qui ne provoquent pratiquement pas de ralentissement de la chaîne de fabrication du panneau composite. Un tel procédé industriel est typiquement l'aiguilletage.

En outre, l'invention permet de renforcer à volonté la liaison entre l'âme et chaque peau. Il suffit de choisir une densité de fibres enfoncées, typiquement une densité d'aiguilletage (nombre de coups par unité de surface de panneau) adaptée aux résultats recherchés. La densité peut être uniforme ou au contraire différente pour différentes zones du panneau, en fonction des sollicitations attendues en service pour chaque zone et/ou en fonction de particularités locales du panneau, par exemple la présence d'inserts ou de cavités dans certaines zones de l'âme.

La matière liante peut être en résine, un liant, une résine moussée, etc... dont on imprègne le panneau après le processus d'enfoncement des fibres, ou encore une matière obtenue par modification des fibres, par exemple un composant des fibres qui fond lorsqu'on expose les fibres à la chaleur. La matière liante assure une consolidation des peaux et une stratification du panneau.

De préférence, les fibres enfoncées se trouvent le long de motifs géométriques tels que rangées, carreaux, points en quinconce. La nature de ces motifs, ainsi que la dimension du motif élémentaire, permettent de renforcer plus ou moins certaines zones du panneau, et/ou le panneau tout entier.

Il est possible de n'enfoncer les fibres que sur une partie de l'épaisseur du volume intercalaire. Ceci est avantageux pour des panneaux de forte épaisseur. On peut ainsi mettre en oeuvre l'invention sans avoir besoin d'une course d'aiguilletage aussi grande que l'épaisseur du panneau. Ceci est également avantageux pour implanter les fibres enfoncées dans des évidements de l'âme qui ne s'étendent que sur une partie de l'épaisseur de l'âme. Mais dans bien des applications, on préfère que les fibres enfoncées forment des ponts reliant les deux peaux ensemble. Pour cela, on peut faire en sorte que les fibres d'une peau rejoignent et s'implantent dans l'armature fibreuse de l'autre peau pour réaliser entre les deux peaux une liaison par aiguilletage par exemple analogue à celle décrite, en tant que telle, dans le EP 0 594 700 B1.

Il est encore possible de réaliser un enfoncement des fibres de liaison de façon que des fibres enfoncées de l'une des peaux rejoignent des fibres enfoncées de l'autre peau et le cas échéant s'entrelacent avec celles-ci dans une certaine région intermédiaire du volume intercalaire. Il est encore possible de réaliser un panneau comportant au moins deux âmes superposées avec éventuellement une peau intérieure, en particulier fibreuse, intercalée entre les deux âmes. Dans ce cas les fibres de liaison peuvent être enfoncées jusqu'à venir se raccorder à cette peau intérieure, en formant ainsi un pont entre la peau extérieure et la peau intérieure.

Dans tous les cas, il est grandement avantageux de favoriser la présence de matière liante en profondeur dans les sites occupés par des fibres enfoncées, de façon que les fibres enfoncées soient intimement liées à l'âme.

On peut selon une première variante enfoncer les fibres de façon qu'elles soient enserrées dans la matière de l'âme, donc en perçant l'âme aussi finement que possible. Cette possibilité est avantageuse lorsque la matière liante est issue d'une modification au moins partielle des fibres appartenant aux peaux et/ou à l'âme. On connaît en particulier des fibres bi-composant comportant une périphérie sensible à une influence extérieure, par exemple thermofusible, et un noyau central résistant à ladite influence. Dans ce cas la périphérie de la fibre sert selon l'invention de matière liante. Mais dans la plupart des cas, selon l'invention, la matière liante est une matière d'imprégnation ajoutée à un stade postérieur à l'enfoncement des fibres, telle que résine. De préférence, selon l'invention, on insère alors les fibres dans des évidements formés dans l'âme d'une manière qui favorisera l'invasion ultérieure par la résine, lors de l'imprégnation. De tels évidements peuvent être préparés à l'avance, en particulier sous forme d'usinages tels que perçages, fraisages, de sillons, ou encore d'intervalles séparant des éléments, tels que des plaques ou des bandes composant l'âme. Mais les évidements peuvent également être pratiqués par l'outillage d'enfoncement des fibres. Dans le cas de l'enfoncement par aiguilletage, on peut par exemple utiliser des aiguilles dont le diamètre et/ou la forme ont pour effet de déplacer la matière de l'âme.

L'âme est typiquement, mais non limitativement, en mousse. Bien que ce matériau soit préférable dans la plupart des applications, il n'est nullement obligatoire selon l'invention. Virtuellement tout matériau permet l'application de l'invention. Un matériau relativement dur devra généralement être préalablement évidé aux sites prévus pour l'implantation de fibres enfoncées ou alors on s'arrangera pour ne pas enfoncer de fibres dans le matériel dur.

En particulier, l'invention se prête particulièrement bien à la réalisation d'âmes composites ayant un matériau principal tel que la mousse, et un ou plusieurs inserts comme par exemple des renforts locaux, des inserts d'ancrage prévus à l'avance dans des zones de fixation ultérieure du panneau composite ou encore dans des zones de fixation ultérieure d'éléments ou accessoires sur le panneau, des conduits, des tubes, des lignes ou autres éléments électriques, par exemple chauffants, des nappes techniques par exemple anti-effraction, etc...

Au choix, on pourra enfoncer certaines fibres dans les inserts pour les rendre plus robustes à l'égard des efforts qu'ils devront subir en service, notamment lorsque les inserts ont une fonction de renfort ou d'ancrage, ou au contraire éviter d'enfoncer des fibres dans les inserts lorsque ceux-ci sont étrangers à la résistance mécanique et/ou relativement fragiles (conduits, lignes électriques), ou au contraire excessivement résistants (nappes anti-effraction).

Une au moins des peaux peut être multicouche. Une peau peut par exemple comporter un textile destiné à fournir les fibres enfoncées et au moins une partie de la résistance mécanique de la peau à l'encontre de la traction, et une couche d'une autre nature, ayant par exemple au moins une fonction isolante, imperméabilisante anti-effraction, esthétique, de résistance mécanique complémentaire, anti-feu, et/ou etc... Ladite autre couche peut être placée du côté de l'âme ou du côté opposé, par rapport à l'armature fibreuse.

L'armature fibreuse peut comporter un textile structuré, ou consolidé tel que tissu, tricot, feutre. Elle peut également être formée, totalement ou partiellement, d'un textile non consolidé, tel que des fibres éparpillées, qui sont de préférence produites à l'entrée du dispositif de production du panneau. Ceci est particulièrement commode lorsqu'il s'agit de régler la quantité de fibres par unité de surface de panneau, la largeur des panneaux produits, etc., notamment lors des changements de fabrication et de la mise au point d'une fabrication nouvelle.

Suivant un second aspect de l'invention, le dispositif pour fabriquer un panneau selon le premier aspect est caractérisé en ce qu'il comprend :
- des moyens d'introduction pour introduire une âme entre deux peaux fibreuses dans un trajet d'aiguilletage; et
- au moins une unité d'aiguilletage pour enfoncer des fibres de l'une au moins des peaux de façon que certaines au moins des fibres s'étendent dans des évidements formés dans au moins un constituant de l'âme, ces évidements comprenant en particulier des poinçonnements, des usinages, ou des sillons.

Suivant un troisième aspect de l'invention, le procédé pour réaliser un panneau composite selon le premier aspect est caractérisé en ce que par aiguilletage on enfonce des fibres de l'une au moins des peaux dans le volume intercalaire, de façon que certaines au moins des fibres s'etendent dans des évidements formés dans au moins un constituant de l'âme, ces évidements comprenant en particulier des poinçonnements, des usinages, ou des sillons.

Avant l'aiguilletage, il est possible de conformer au moins une face de l'âme, en particulier par fraisage, découpage. La conformation peut consister soit à donner à cette face de l'âme la forme prévue pour la face correspondante du produit fini, soit à préparer, par exemple sous forme de sillon ou rainure, des zones de déformation qui permettront ensuite, par moulage lors de l'imprégnation, de donner au panneau une forme générale non plane, soit encore à préparer des évidements destinés à recevoir les fibres enfoncées.

D'autres particularités et avantages de l'invention ressortiront encore de la description ci-après, relative à des exemples non limitatifs.

Au dessins annexés :
- la figure 1 est une vue en perspective, avec arrachement, d'un premier mode de réalisation d'un panneau selon l'invention ;
- la figure 2 est une vue en perspective d'un exemple de structure fibreuse d'un panneau selon l'invention ;
- la figure 3 montre en coupe, à échelle agrandie, un détail du panneau de la figure 1, en deux sites d'enfoncement des fibres ;
- la figure 4A est une vue en coupe d'un panneau selon l'invention du même genre que celui de la figure 1 ;
- la figure 4B montre deux stades de réalisation du panneau de la figure 4A, avec un détail à échelle agrandie ;
- la figure 5 est une vue en coupe longitudinale d'un outillage pour un dispositif de fabrication d'un panneau selon l'invention ;
- la figure 6 est une vue partielle de dessus d'un outillage selon la figure 5, en cours de production ;
- la figure 7 est une vue partielle en bout à l'extrémité gauche de la figure 6 ;
- la figure 8 est constituée par deux vues d'un premier mode de réalisation des aiguilles ;
- la figure 9 est constituée par deux vues d'un deuxième mode de réalisation des aiguilles ;
- la figure 10 est une vue d'ensemble d'un dispositif selon l'invention, en élévation latérale schématique ;
- les figures 11 à 14 sont quatre vues partielles en coupe pour quatre autres modes de réalisation de panneaux selon l'invention ;
- la figure 15 est une vue analogue à la figure 5 mais relative à une version perfectionnée ;
- la figure 16 est une vue partielle de dessus, d'un peigne de guidage du dispositif selon la figure 15 ;
- la figure 17 est une vue en coupe transversale d'un autre mode de réalisation de panneau selon l'invention, avec représentation partielle de l'outillage de réalisation ;
- la figure 18 est une vue en coupe transversale d'éléments constitutifs d'une âme pour panneau selon l'invention ;
- les figures 19 et 20 sont deux vues en coupe transversale de panneaux conformés réalisables avec l'âme de la figure 18 ;
- la figure 21 est une vue analogue à la figure 18 mais représentent une autre âme utilisable pour réaliser le panneau conformé de la figure 20 ;
- la figure 22 représente un autre exemple de panneau conformé ;
- la figure 23 représente en coupe transversale l'âme du panneau de la figure 22 en cours de fabrication dans son outillage de fabrication ;
- la figure 24 représente en coupe transversale encore un autre exemple de panneau en cours de fabrication dans l'outillage approprié ; et
- la figure 25 représente encore un autre mode de réalisation du panneau, en coupe transversale partielle.

Sous le terme « panneau », on entend suivant l'invention un matériau composite ayant une dimension d'épaisseur relativement faible par rapport à deux autres dimensions rectilignes ou curvilignes telles qu'une longueur et une largeur. En particulier, le mot « panneau » ne limite pas l'objet visé à un objet plein, ni à un objet d'épaisseur constante, comme le montreront des exemples précis décrits par la suite.

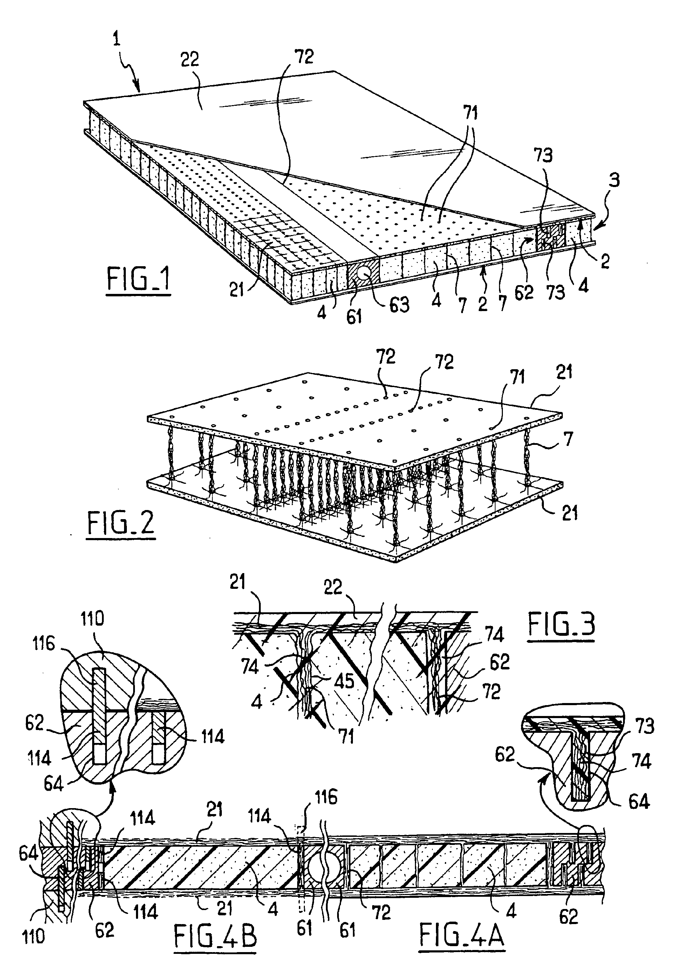

Dans l'exemple représenté à la figure 1, le panneau 1 comprend deux peaux 2 s'étendant dans des plans parallèles et définissant entre elles un volume intercalaire occupé par une âme 3. Dans l'exemple représenté, l'âme 3 comprend des plaques de mousse 4 placées côte à côte avec interposition d'inserts 61, 62 qui sont des profilés dont la direction longitudinale est parallèle à une direction longitudinale du panneau 1, correspondant à sa direction de défilement dans le dispositif de fabrication qui sera décrit plus loin. Dans l'exemple très particulier qui est représenté, l'insert 61, par exemple en bois ou en matière plastique, présente un profil extérieur rectangulaire dont deux côtés opposés sont adjacents aux peaux et deux autres côtés opposés sont adjacents à deux plaques 4, et un profil intérieur circulaire délimitant un conduit 63 qui peut par exemple être un conduit de passage d'un fluide, un conduit de passage d'une tringlerie, ou encore un guide pour une ou plusieurs lignes électriques. L'insert 62 est dans cet exemple un insert plein ayant un profil extérieur rectangulaire dont deux côtés opposés sont adjacents aux deux peaux et deux autres côtés opposés sont adjacents à deux plaques 4. Un tel insert peut avoir une fonction de renfort local, ou encore d'ancrage pour la fixation du panneau 1 sur un châssis ou la fixation d'un ou plusieurs éléments sur le panneau 1.

Chaque peau comprend une nappe de fibres 21 noyée dans une matière liante telle qu'une résine 22. A la figure 1, la résine 22 est schématiquement représentée superposée à la nappe de fibres 21. En pratique, comme le montre la figure 3, la résine 22 imprègne les fibres 21 et réalise ainsi une solidification de l'ensemble fibre-résine ainsi qu'une solidarisation de cet ensemble avec la surface de l'âme 3. Selon la nature de la mousse, qui peut par exemple être à pores ouverts ou à pores fermés, et la nature de la matière liante 22, cette dernière peut imprégner ou non les régions de la mousse 4 qui sont limitrophes avec les peaux 2. La figure 3 illustre une certaine imprégnation de ces régions limitrophes.

Conformément à l'invention, le panneau composite comprend des fibres 7 qui proviennent de l'une ou l'autre des nappes 21 et qui lors de la fabrication du panneau ont été enfoncées dans l'âme 3. Les fibres 7 sont enfoncées selon une direction générale perpendiculaire au plan des peaux 2 dans le volume intercalaire occupé par l'âme 3 entre les peaux.

Les fibres enfoncées 7 sont regroupées en touffes ponctuelles 71 ou encore en touffes linéaires 72. Dans cet exemple, les touffes linéaires ou rangées 72 sont situées de part et d'autre de chacun des inserts 61, 62, et sont donc longitudinales relativement au panneau. Les touffes ponctuelles 71 sont disposées selon un motif de colonnes longitudinales et d'alignements transversaux, avec dans l'exemple particulier de la figure 1 une disposition en quinconce dans la plaque 4 située entre les deux inserts 61, 62, et une disposition plus serrée avec motifs élémentaires en carré dans la plaque 4 située de l'autre côté de l'insert 61. D'une manière générale, il est prévu que les fibres enfoncées sont réparties suivant un motif et une densité choisie à volonté dans chaque panneau, ainsi que, dans un panneau déterminé, dans chaque zone longitudinale du panneau. On peut même envisager de créer des zones transversales différenciées, par exemple en modulant la vitesse d'avance d'un panneau à travers le dispositif de fabrication qui sera décrit plus loin.

Les fibres enfoncées 7 de l'exemple de la figure 1 s'étendent de l'une à l'autre des deux peaux 2 en formant des ponts de fibres entre les deux peaux à chaque site d'implantation des touffes 71 ou 72. La figure 2, qui représente la structure fibreuse d'un panneau selon l'invention, montre que chaque pont crée une liaison fibreuse entre les deux nappes de fibres 21. Ont voit également que les touffes linéaires 72 sont créées par un alignement rapproché de touffes ponctuelles semblables aux touffes 71. Dans l'exemple de la figure 2, le motif d'implantation des touffes ponctuelles 71 est en carré et non pas en quinconce.

En outre, les fibres enfoncées 7 comprennent des touffes 73 provenant de chacune des nappes 21 et qui sont enfoncées dans des rainures longitudinales 64 formées dans l'une et l'autre des deux faces de l'insert 62 adjacentes aux peaux 2 (voir détail agrandi de la figure 4A). Les rainures 64 sont en forme de fente s'étendant perpendiculairement aux peaux 2, sur une profondeur qui est typiquement légèrement supérieure à la moitié de la distance entre les deux peaux.

Dans l'exemple représenté, les touffes ponctuelles 71 sont insérées dans la masse des plaques de mousse 4 sans qu'il y ait eu préparation par un évidement préalable. Par contre, les touffes linéaires 72 adjacentes aux inserts 61 et 62 occupent des intervalles ménagés entre plaque de mousse 4 et insert 61 ou 62.

L'imprégnation avec la matière liante 22 a pour effet de pénétrer dans l'âme 3 le long des sites occupés par les touffes. Cette pénétration est permise grâce aux évidements occupés par les fibres enfoncées dans l'âme : rainures 64 dans l'insert 62, intervalles entre inserts 61, 62 et plaques 4, puits 45 (figure 3) formés dans la mousse 3 lors de l'enfoncement des fibres 7 comme on le décrira plus loin.

La matière liante 74 qui noie les fibres enfoncées 71, 72, 73 a pour effet de fixer intimement ces fibres enfoncées avec les matériaux avoisinants appartenant à l'âme, donc dans l'exemple la mousse 4 et les inserts 61, 62. On réalise ainsi un accrochage entre l'âme et chaque peau et il en résulte une résistance particulièrement élevée du panneau à l'encontre de la délamination. En outre, dans le cas de fibres enfoncées 7 formant des ponts entre les deux peaux, il est également réalisé un accrochage des deux peaux l'une à l'autre. Plus particulièrement, dans le cas représenté où les fibres d'un pont sont des fibres prélevées dans l'une des peaux et enfoncées à travers l'âme jusqu'à atteindre l'autre peau, l'imprégnation de résine réalise ensuite une fixation entre les fibres enfoncées et ladite autre peau.

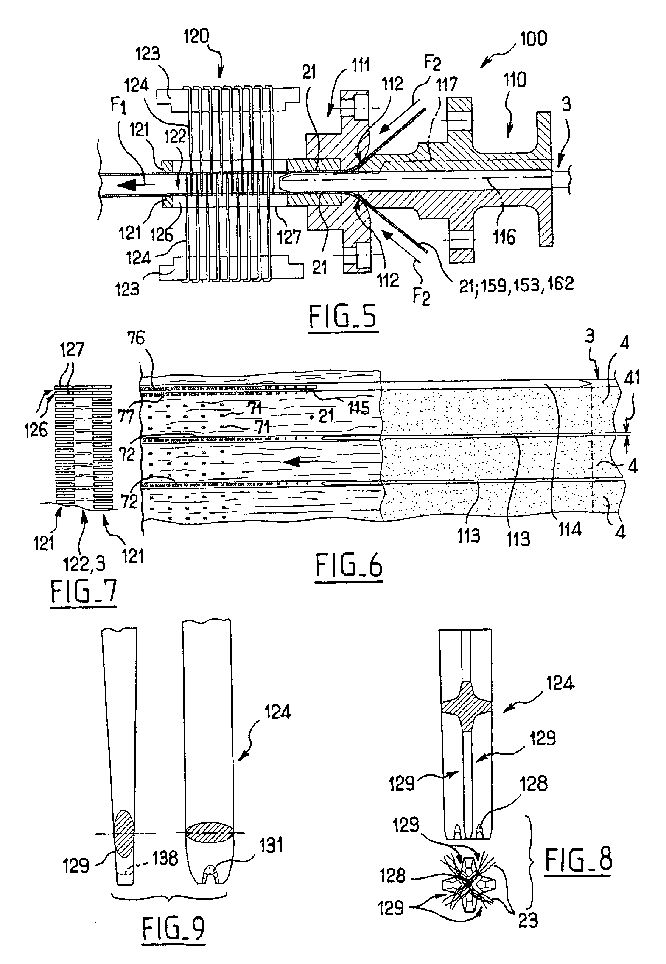

On va maintenant décrire en référence à la figure 5 un outillage 100 utilisable dans un dispositif pour la fabrication d'un panneau conforme à l'invention. L'outillage 100 comprend un guide 110 pour l'introduction de l'âme 3 dans un mouvement d'avance vers la gauche de la figure 5 (flèche F1), et un guide 111 placé en aval du guide 110 pour introduire l'empilement comprenant l'âme 3 placée entre deux nappes de fibres 21. Les guides 110 et 111 définissent entre eux deux fentes d'introduction 112, inférieure et respectivement supérieure, pour introduire selon les flèches F2 chacune des nappes 21 sur les faces supérieure et respectivement inférieure de l'âme 3 à l'entrée du guide 111.

L'outillage de fabrication 100 représenté à la figure 5 comprend en outre un outillage d'aiguilletage 120 destiné à assembler l'âme 3 avec les deux nappes 21. L'outillage d'aiguilletage 120 comprend à son tour :
- deux débourreurs 121 qui définissent entre eux un trajet d'aiguilletage 122 constituant la continuation du trajet à travers le guide 111;
- deux planches à aiguilles 123 situées de part et d'autre, respectivement, du trajet d'aiguilletage 122, et portant des aiguilles 124 orientées perpendiculairement au plan du trajet 122 ; les pointes des aiguilles 124 sont capables de pénétrer dans le trajet d'aiguilletage 122 à travers des fentes 126 formées entre des lamelles 127 (voir aussi figure 7) composant les débourreurs 121 dans la zone où se trouvent les aiguilles 124.

Lorsque l'outillage 100 est installé dans une machine de production, chaque planche à aiguilles 123 est fixée à un moyen d'actionnement en un mouvement de va-et-vient perpendiculaire au plan du trajet d'aiguilletage 122 de sorte que les pointes des aiguilles 124 pénètrent dans le trajet d'aiguilletage 122 et en ressortent. L'avance de l'assemblage de l'âme 3 et des nappes 21 selon la flèche F1 est synchronisée avec le mouvement des aiguilles 124 de sorte que l'assemblage avance lorsque les aiguilles 124 sont dégagées du trajet d'aiguilletage 122 et l'avance de l'assemblage est stoppée lorsque les aiguilles 124 sont saillantes dans le trajet d'aiguilletage 122. Dans l'exemple représenté, les aiguilles 124 situées d'un côté du trajet d'aiguilletage 122 sont décalées par rapport aux aiguilles 124 situées de l'autre côté, ce qui permet de synchroniser les deux planches à aiguilles 123 de façon que toutes les aiguilles 124 soient simultanément engagées dans le trajet d'aiguilletage 122 et en soient simultanément dégagées pour permettre l'avance de l'assemblage.

Les aiguilles ont pour fonction de venir en prise avec des fibres de la nappe 21 située du côté où se trouvent les aiguilles considérées, et d'enfoncer ces fibres dans l'âme 3 de l'assemblage. On décrira plus loin des exemples d'aiguilles capables d'entraîner ainsi les fibres. Lorsqu'elles sont en état de pénétration maximale, comme représenté à la figure 5, les pointes des aiguilles atteignent la nappe 21 opposée. Ainsi, dans ce mode de réalisation, les fibres entraînées par les aiguilles sont enfoncées jusqu'à atteindre la nappe 21 opposée. Il est même possible de faire en sorte que les aiguilles transpercent la nappe opposée, totalement ou partiellement, pour favoriser une interpénétration des fibres enfoncées avec la nappe opposée.

Dans l'exemple plus particulièrement représenté aux figures 5 à 7, l'âme 3 du panneau en cours de production est composée de plaques de mousse 4 relativement étroites, en forme de bandes, séparées par des parois de guidage 113 qui maintiennent un certain écartement 41 entre les plaques 4. Les parois de guidage 113 sont fixées dans le guide d'introduction 110 et se terminent juste en amont des aiguilles 124. Chaque paroi 113 est alignée avec une rangée d'aiguilles 124 qui forment ensuite une rangée 72 de fibres enfoncées dans l'intervalle correspondant à l'écartement 41 entre deux plaques 4.

Une autre paroi de guidage 114 s'étend jusqu'en aval des aiguilles 124 mais comporte en face d'une rangée d'aiguilles une fente 115 permettant à ces aiguilles 124 de former dans la fente 115 une autre rangée 76 de fibres enfoncées. Une rangée 77 est également formée dans la mousse 4 par une rangée d'aiguilles le long de la paroi de guidage 114. La paroi de guidage 114, plus épaisse que les parois 113, est dans cet exemple placée le long d'un bord latéral de l'âme 3. La paroi 114 présente une résistance mécanique plus importante correspondant aux efforts de guidage le long d'un bord de l'âme, qui sont accrus par rapport à ceux pouvant s'exercer sur une paroi 113 soutenue des deux côtés par une plaque 4. La paroi 114 prolonge le guidage latéral pour réaliser une double rangée 76, 77 de fibres enfoncées le long du bord du panneau composite et renforcer ainsi celui-ci sur sa bordure. La paroi 114 sert d'entretoise entre les deux nappes 21 lors de l'aiguilletage pour la formation de la rangée 76 située le plus à l'extérieur. Enfin, la paroi 114 et la fente 115 peuvent servir de guides aux aiguilles.

Certaines aiguilles 124 sont situées dans des régions entre les plans des parois de guidage 113 et 114 pour y former des touffes ponctuelles 71. Dans l'exemple de la figure 6, les touffes 71 sont réparties selon un motif élémentaire en carré (ou rectangle). Il y a ainsi des colonnes longitudinales de touffes ponctuelles 71 qui sont formées, chacune par une seule aiguille située à l'extrémité aval de l'ensemble d'aiguilles 124.

D'une manière générale, la disposition des aiguilles sur les planches 123, la cadence de frappe des aiguilles 124 et le pas d'avance du produit selon la flèche F1 sont choisis en combinaison pour obtenir le motif de fibres enfoncées désiré.

Après la sortie de l'outillage d'aiguilletage 120, le produit semi-fini est découpé en panneaux élémentaires, par des coupes transversales avec un outillage de coupe connu non représenté. Dans un poste de moulage, les panneaux découpés sont introduits dans un moule où est injectée la matière liante telle que résine. Cette étape classique en soi est également non représentée, car connue dans la fabrication des panneaux composites dits «sandwich ». Le moule peut être plan pour réaliser un panneau plan, ou au contraire non plan pour simultanément déformer le produit semi-fini plan en un panneau fini ayant une forme non plane désirée.

La figure 8 montre un premier exemple d'aiguilles 124 ayant un profil cruciforme qui définit à l'extrémité de l'aiguille un évidement 128 en forme d'étoile à au moins trois branches, et plus particulièrement à quatre branches dans cet exemple. Les fibres 23 illustrées à la figure 7 montrent que l'évidement 128 permet à l'aiguille 124 de capter et d'enfoncer un grand nombre de fibres à chaque frappe, ces fibres ayant au moins deux orientations différentes. Lors de la pénétration de l'aiguille, les fibres 23 captées par l'évidement 128 se placent le long des canaux latéraux 129 positionnés dans les prolongements de l'évidement 128. Ces canaux 129 correspondant aux parties concaves de la section cruciforme de l'aiguille facilitent l'enfoncement et le placement des fibres dans l'âme. Dès que commence le mouvement de retrait de l'aiguille, l'évidement 128 libère les fibres enfoncées. Les fibres enfoncées restent donc sensiblement dans la position où les aiguilles les avaient entraînées dans leur position de pénétration maximale. En même temps, l'aiguille 124 présente un profil général massif à son extrémité, pour lui conférer d'une part une robustesse importante et d'autre part une capacité à former, par poinçonnement dans les plaques 4, les évidements ou puits 45 (figure 3) déjà mentionnés, qui favoriseront ensuite l'invasion par la matière liante 74.

La figure 9 montre un autre type d'aiguille 124 ayant une section ovale et une extrémité 131 progressivement aplatie à la manière d'un tournevis pour former une sorte de poinçon ou stylet. Il y a une gorge 132 dans le bord extrême de l'extrémité aplatie 131 qui constitue ainsi une fourche. Ces aiguilles sont conçues pour pénétrer dans un matériau d'âme 4 relativement résistant, grâce à un certain effet de coupe assuré par l'extrémité 131 pour former là encore, au moins dans certains cas, un évidement tel que 45 dans l'âme et favoriser ainsi l'invasion ultérieure par la matière liante 74. La gorge 132 sert à capturer les fibres rencontrées par l'extrémité aplatie 131 lors de sa pénétration, et à libérer ces fibres dès le début du mouvement de retrait de l'aiguille.

Lorsque l'aiguille de la figure 9 est utilisée pour former une rangée relativement dense de fibres enfoncées telles que les rangées 72, 76 et 77, avec la direction d'allongement de l'extrémité 131 qui est orientée parallèlement à la direction d'avancement du produit, les frappes successives des aiguilles forment dans la mousse 4 un sillon qui favorisera ensuite la pénétration de la matière liante telle que résine.

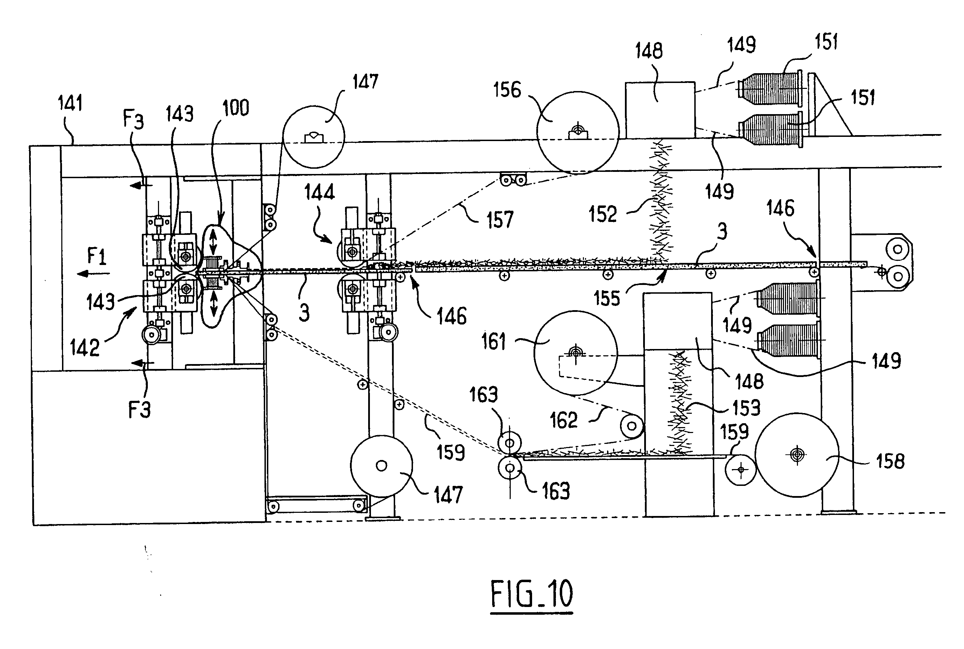

La figure 10 représente un exemple de dispositif de fabrication selon l'invention.

On ne re-décrira pas l'outillage 100 qui peut être identique à celui de la figure 5. A la sortie de l'outillage 100, le produit semi-fini passe entre les cylindres d'entraînement 143 d'un appareillage d'avance pas à pas 142, entraînés par des servo-moteurs. La périphérie des cylindres 143 comporte une garniture de type connu pour assurer un couplage positif avec le produit semi-fini sortant de l'aiguilletage. Un autre appareillage d'avance 144 de même type est placé en amont de l'outillage 100 pour l'entraînement pas à pas des matériaux avant leur entrée dans le guide 110 (voir figure 5) de l'outillage 100. Dans la situation de début de fabrication représentée à la figure 10, où le bord avant du produit semi-fini n'a pas encore atteint l'appareillage d'avance aval 142, l'entraînement est assuré par l'appareillage amont 144. Par la suite, les deux appareillages 142 et 144 fonctionnent de façon synchronisée pour faire avancer le produit lorsque, comme déjà exposé en référence à la figure 5, les aiguilles 124 de l'outillage sont dégagées du produit. En outre, dans l'exemple représenté à la figure 10, les matériaux constitutifs de l'âme du produit sont pré-coupés transversalement en des emplacements 146 qui correspondent aux bords transversaux futurs des panneaux à fabriquer. On facilite ainsi la coupe ultérieure des panneaux après aiguilletage et avant moulage. Pour être sûr que la coupe ultérieure coïncide avec les emplacements prédécoupés 146, ceux-ci présentent un léger écartement. Grâce à la présence des deux appareillages d'avance 142, 144, chaque segment prédécoupé de l'âme est entraîné positivement par l'un et/ou l'autre des deux appareillages d'avance de sorte que l'écartement des pré-découpages 146 est maintenu jusqu'au site de coupe ultérieur (non représenté). Des flèches F3 symbolisent que l'un des appareillages d'avance (142) peut être réglé en ce qui concerne sa position parallèlement à la direction F1 d'avance du produit, en particulier pour faire en sorte que l'écartement entre les deux appareillages d'avance 142, 144 soit inférieur à la longueur entre pré-découpages 146 successifs.

Le bâti 141 du dispositif représenté à la figure 10 est capable de supporter de chaque côté du plan de défilement de l'âme 3, une bobine de mat préconsolidé 147 pour que ce mat constitue une nappe de fibres 21 (figure 5) arrivant par les fentes 112 suivant les flèches F2. Ce mode de fonctionnement du dispositif nécessite de pouvoir fabriquer ou se procurer le mat préconsolidé. Il nécessite également une manutention des bobines 147 dont la consommation peut être relativement rapide étant donné que le procédé selon l'invention est capable d'une production horaire très élevée. En outre, la modification d'une fabrication en cours en ce qui concerne la composition et/ou la largeur de l'armature fibreuse des peaux nécessite de disposer d'autres bobines 147 d'un mat ayant la structure, le dimensionnement et/ou la composition désirée. On voit en particulier que la mise au point d'une fabrication particulière peut être relativement laborieuse avec les mats 147.

C'est notamment pour cette raison que le dispositif représenté à la figure 10 comprend en outre de chaque côté du plan de défilement de l'âme 3, en amont de l'outillage 100, un appareillage de coupe 148 qui transforme des filaments continus 149 provenant de bobines 151 en des fibres coupées 152 déposées en éparpillement sur la face supérieure de l'âme 3 en amont de l'appareillage d'avance amont 144, et respectivement en des fibres coupées 153 destinées à être introduites sous forme éparpillée du côté inférieur de l'âme 3 à travers la fente d'introduction inférieure 112 (figure 5). Les filaments 149 sont typiquement des filaments inorganiques (ce que l'on appelle un « roving »). Les fibres 152, 153 ont une longueur de préférence supérieure à 3 à 4 fois l'épaisseur de l'âme. Ainsi, dans une application typique, la longueur des fibres est de 50 à 100 mm.

On profite de l'effet de gravité pour déposer directement les fibres 152 sur la face supérieure de l'âme 3. Le bâti 141 supporte en outre, au dessus de l'âme 3, une bobine 156 d'un matériau en bande 157 ayant sensiblement la même largeur que l'âme 3, et que l'on vient positionner au dessus des fibres 152 déposées, en particulier pour réaliser une préfixation des fibres 152 sur l'âme 3. Le matériau en bande 157 est introduit avec les fibres 152 précédemment déposées, entre les cylindres d'entraînement de l'appareillage d'avance amont 144, de façon que les cylindres de l'appareillage 144 tassent les fibres 152 entre l'âme 3 et le matériau en bande 157. L'ensemble pénètre dans l'outillage 100 à travers le guide 110 (figure 5). Dans ce mode de fonctionnement, par conséquent, le guide 110 sert à introduire non seulement l'âme 3 mais également l'armature fibreuse de la peau supérieure du futur panneau.

En dessous du plan de défilement de l'âme 3, le bâti 141 supporte une autre bobine 158 pour un matériau en bande 159 pouvant être identique au matériau en bande 157 mais dont le trajet de circulation est tel qu'il reçoit les fibres coupées 153 tombant de l'appareillage de coupe inférieur 148. Ensuite, le matériau en bande 159 est guidé vers la fente d'introduction 112 inférieure (voir figure 5). Le bâti 141 supporte encore une bobine 161 pour un troisième matériau en bande 162 venant se placer au dessus des fibres coupées 153 déposées sur le matériau en bande 159. Les fibres 153 sont prises en sandwich et tassées entre les matériaux en bande 159 et 162 lorsque l'ensemble passe entre deux rouleaux de guidage et de pincement 163. L'ensemble pénètre ensuite dans l'outillage 100 par la fente inférieure 112.

Les deux matériaux en bande 157 et 159 qui forment les deux faces extérieures du produit avant l'enduction peuvent typiquement être un voile consolidé léger, de par exemple 15 à 30 g/m². Le voile consolidé est par exemple constitué de fibres thermo-soudées, par exemple en polypropylène, mais il peut également s'agir d'un voile formé de filaments (« spun »), ou encore d'un tissu, d'un non-tissé, d'un canevas, en fibres inorganiques, organiques, végétales, etc, destiné à avoir une fonction de renfort des peaux, et/ou d'autres fonctions spécifiques souhaitées. Le matériau en bande 162 qui va se trouver ente les fibres inférieures 153 et la face inférieure de l'âme peut soit être d'une nature semblable à l'une des celles décrites pour les matériaux 157 et 159, ou encore, par exemple, être un matériau beaucoup plus lourd, de 150 à 300 g/m² par exemple, ayant une fonction avantageuse de garder un certain gonflant jusqu'au stade du moulage pour drainer la résine d'imprégnation. Un tel non-tissé gonflant peut être constitué de fibres en polypropylène. Il existe également des tissus drainants ayant sensiblement les même propriétés, que l'on peut aussi utiliser.

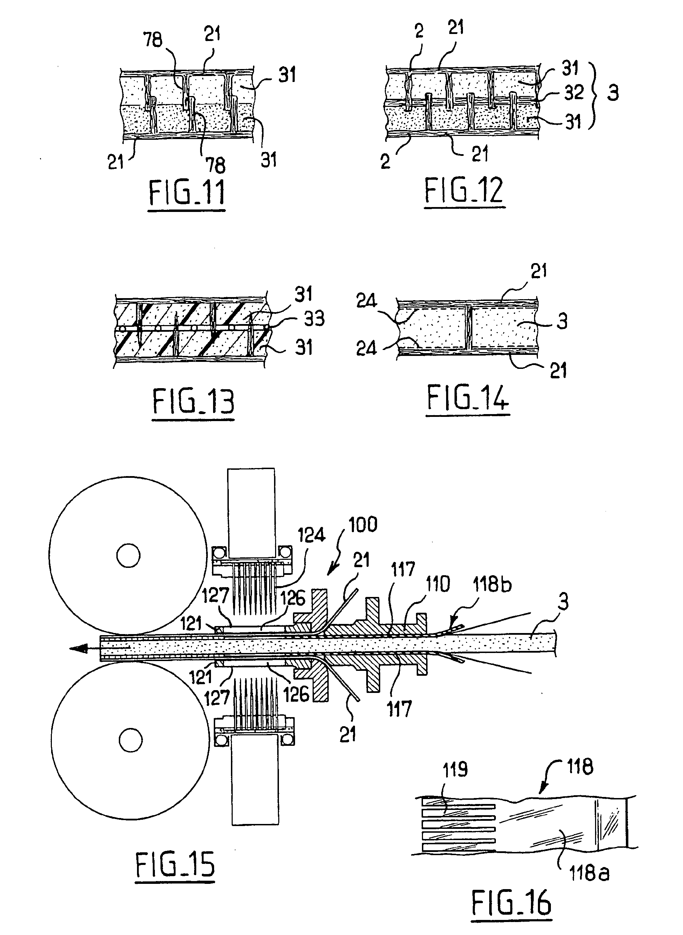

Dans l'exemple représenté à la figure 11, le panneau est plus épais, il comporte deux âmes élémentaires superposées 31. Les fibres enfoncées 78 issues de l'une des armatures fibreuses 21 des peaux ne s'étendent pas jusqu'à l'armature fibreuse opposée, mais simplement jusqu'à pénétrer partiellement dans l'âme élémentaire 31 adjacente à la peau 2 opposée. En outre, dans cet exemple, les fibres enfoncées 78 issues des deux armatures fibreuses 21 se rencontrent pour former des ponts. Les aiguilles 124 d'une planche sont décalées par rapport à celles de l'autre planche comme représenté à la figure 5. Entre deux frappes on fait avancer le produit sur une distance sensiblement égale au décalage entre deux aiguilles qui se correspondent.

L'exemple de la figure 12 se distingue de celui de la figure 11 en ce qu'on a placé une armature fibreuse intermédiaire 32 entre les deux âmes élémentaires 31. L'armature 32 est destinée à s'imprégner au moins partiellement de résine pendant le moulage. Elle constitue alors une peau intérieure.

Dans l'exemple représenté à la figure 13, l'armature fibreuse intermédiaire est remplacée par un grillage anti-effraction 33. Un tel panneau est utile pour les carrosseries de véhicule utilitaire. A la place d'un grillage métallique, ont peut également utiliser une structure en Kevlar®.

Dans l'exemple de la figure 14, l'âme 3, par exemple à une seule couche, est séparée de l'armature fibreuse 21 par un matériau de renfort 24 tel qu'un tissu en fibres inorganiques, comme des bi-axiaux, des multi-axiaux, etc.

La figure 4B, relative à la fabrication d'un produit analogue à celui des figures 1 et 4A, montre, dans sa partie gauche, la situation à l'intérieur du guide 110 et dans sa partie droite la situation juste avant le début de l'aiguilletage. Des parois de guidage 116, dont l'une est également représentée en traits mixtes à la figure 5, ne s'étendent que sur une partie de l'épaisseur du passage prévu pour l'âme 3 dans le guide 110, et présentent en amont de la fente 112 une aile de fixation 117 dans le guide 110. Ces parois 116 sont capables de pénétrer dans les rainures 64 de l'insert 62 ou de se placer entre la plaque 4 et chacun des inserts 61, 62.

Dans l'exemple représenté aux figures 15 et 16, l'outillage 100, qui ne sera décrit que pour ses différences par rapport à celui de la figure 5, comprend des peignes 118 entre lesquels est formé le passage pour l'âme 3 dans le guide 110. Les peignes 117 comprennent à l'intérieur du guide 110 et 111 une paroi continue 118a. En amont du guide 110, les peignes 118 forment l'un avec l'autre un convergent 118b qui dans l'exemple représenté, sert à guider le matériau de renfort 24 de la figure 14 dans le passage du guide 110 avec les composants de l'âme 3. Les peignes 118 se prolongent par des dents 119 qui coïncident avec les lamelles 127 des débourreurs 121. Les espaces entre les dents 119 coïncident avec les fentes 126 entre lamelles. Les armatures fibreuses 21 passent entre peigne et débourreur. Les aiguilles 124 passent dans les fentes 126 entre lamelles 127, traversent les armatures fibreuses 21, puis passent entre les dents 119 des peignes 117 pour s'enfoncer dans le matériau 24 et dans l'âme 3. La fonction des peignes 117 est de soutenir les structures fibreuses 21 pendant l'aiguilletage pour éviter que les efforts d'aiguilletage compriment l'âme 3, notamment lorsque celle-ci est constituée d'une mousse relativement légère. A leurs extrémités aval, les dents 119 sont séparées les unes des autres et forment ainsi des ouvertures par lesquelles les fibres enfoncées par l'aiguilletage peuvent sortir du peigne lors du déplacement du produit vers l'aval.

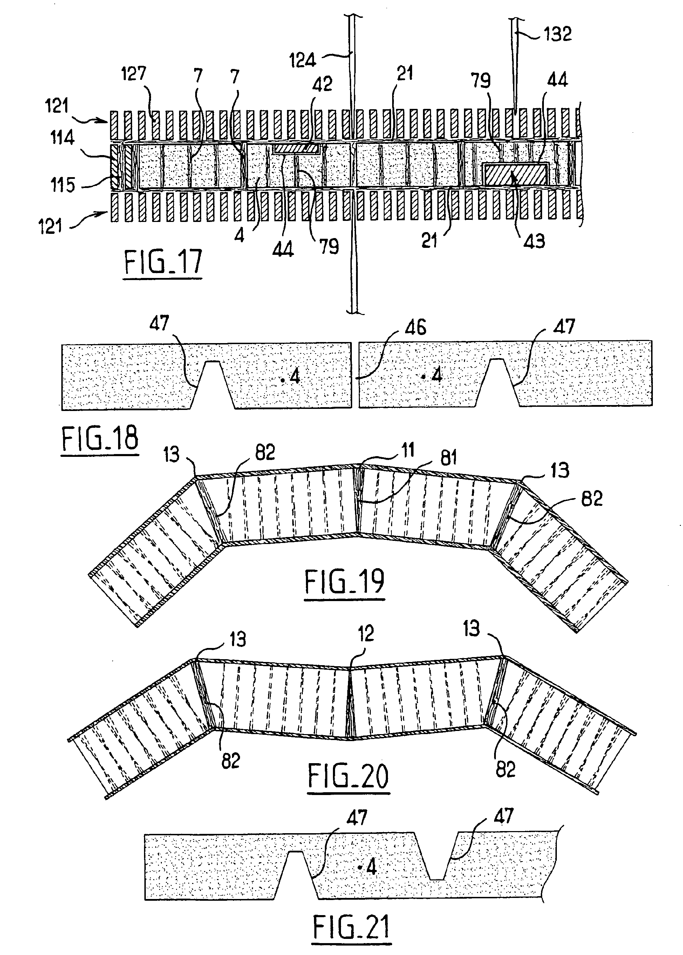

Dans l'exemple représenté à la figure 17, la plaque en mousse 4 constitutive partielle de l'âme comporte des évidements 44 formés dans l'une et/ou l'autre de ses faces principales. Dans ces évidements, l'âme comprend des inserts 42, 43 qui occupent une partie de l'épaisseur de l'âme dans une région prédéterminée, par exemple pour constituer un renfort judicieusement positionné, une embase d'ancrage en des emplacements où, par exemple, le panneau est destiné à être fixé à une structure porteuse, ou est au contraire destiné à supporter lui-même un élément structurel, un accessoire, etc. La figure 17 représente également la paroi de guidage 114 avec sa fente 115 de la figure 6, des ponts de fibres 7 de différentes sortes déjà décrites et également des fibres enfoncées 79 dont la profondeur est limitée à partir de l'une des armatures fibreuses 21 pour ne pas venir interférer avec les inserts 42, 43. Ceci est réalisable grâce à des aiguilles plus courtes 132 pour la réalisation de ces touffes ou rangées moins profondes 79. Les inserts 42 et 43 sont introduits avec les autres constituants de l'âme 3 à travers les guides 100 et 110 (figure 5).

Dans l'exemple représenté à la figure 18, les plaques de mousse 4 sont multiples et placées côte à côte avec un intervalle 46 entre bords latéraux adjacents pour constituer l'âme du panneau. Comme illustré à la figure 19, qui représente une partie d'un panneau composite pouvant être obtenu avec les plaques 4 de la figure 18, l'intervalle 46 sert au passage de fibres enfoncées formant un pont 81 entre les deux peaux. En outre, cet intervalle a permis de mouler le panneau avec une forme non plane formant un angle 11 à l'emplacement de la jonction entre les deux plaques 4. Dans l'exemple de la figure 20, on a formé un angle 12 dans l'autre sens.

En outre, dans l'exemple de la figure 18, l'une des faces de chaque plaque 4 comporte un évidement longitudinal 47 en forme générale de V qui confère à chaque plaque 4 la possibilité de se déformer selon un profil diédrique lors du moulage, avec, à chaque fois, un angle 13 (figures 19 et 20), dans le même sens que l'angle 11 (figure 19) ou en sens opposé à l'angle 12 (figure 20). La déformation consiste en une fermeture totale ou partielle de l'évidement 47 moyennant flexion de la plaque 4 au fond de l'évidement. Le matériau fibreux excédentaire de la peau adjacente à l'ouverture de l'évidement 47, se loge dans l'évidement en formant dans celui-ci un pli vers l'intérieur (non davantage représenté).

Dans l'exemple représenté à la figure 21, une plaque 4 unique présente des évidements longitudinaux 47 situés alternativement dans une face et dans la face opposée, ce qui permet également de réaliser un panneau tel qu'à la figure 20, avec des angles 12, 13 alternativement dans un sens et dans le sens opposé.

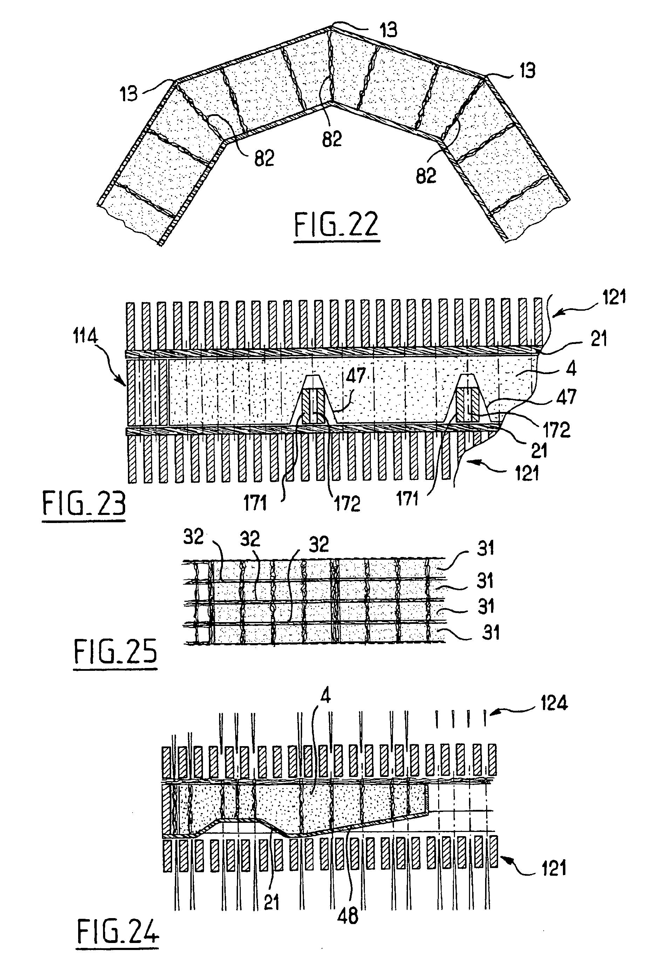

On pourrait encore, dans une même plaque 4 avoir des évidements longitudinaux tels que 47 disposés côte à côte dans une même face pour réaliser un panneau tel que représenté à la figure 22, avec des angles 13 successifs et relativement marqués, tous dans le même sens.

Un tel panneau est représenté à la figure 23 au cours de son passage à travers un outillage selon l'invention, où on reconnaît les deux débourreurs 121, la paroi de guidage 114, ainsi que des guides 171 qui s'étendent dans les évidements 47 entre âme et structure fibreuse. Les guides 171, fixés dans le guide 110, présentent une fente de passage 172 pour les aiguilles d'aiguilletage (non représentées à cette figure). Les guides 171 soutiennent l'armature fibreuse 21 dans la région des évidements 47 tout en permettant de former un pont de fibres entre les deux structures fibreuses 21 à travers le fond des évidements 47. On réalise ainsi des ponts 82 visibles au figures 19, 20 et 22.

Dans l'exemple représenté à la figure 24, la plaque 4 utilisée présente une face 48 supérieure plane et une face non plane, profilée de manière souhaitée, soit préalablement à son introduction dans un dispositif de fabrication tel que celui de la figure 10, soit dans un appareillage d'usinage, par exemple de fraisage, intégré à l'entrée du dispositif de la figure 10. En chaque point de la largeur de l'appareillage d'aiguilletage, les aiguilles 124 situées du côté opposé à la face profilée 48 de l'âme ont une longueur adaptée à l'épaisseur locale de l'âme. Le guide 111 (figure 5) peut comporter une face inférieure profilée de façon correspondant à celle de la face adjacente profilée 48 de l'âme et de la structure fibreuse 21 qui est appliquée dessus de manière à épouser le profil non-plan de la face 48. De manière non représentée, le guide 111 peut comporter des doigts qui s'étendent vers l'aval dans le trajet d'aiguilletage pour soutenir le produit dans les régions où il est, en raison de son profilage, écarté du débourreur 121 correspondant. De tels doigts présentent des écartements entre eux permettant le passage des aiguilles 124.

A la sortie de l'appareillage d'aiguilletage, le produit semi-fini peut être placé dans un moule dont l'une des faces présente un profilage non plan correspondant, pour obtenir directement un panneau composite dont l'une des faces est profilée d'une manière désirée.

Il est également possible de réaliser un panneau dont les deux faces sont profilées de manière non plane.

Dans l'exemple représenté à la figure 25, l'assemblage comprend une âme formée de quatre âmes élémentaires 31 superposées, séparées par des peaux intérieures 32 pouvant avoir des compositions identiques ou différentes, fibreuses ou non.

Bien entendu, l'invention n'est pas limitée aux exemples décrits et représentés.

Si l'on utilise des fibres ayant par nature ou par enduction préalable des aptitudes à la thermofusion, il est possible de réaliser un panneau sans procéder à une imprégnation par injection de résine dans un moule, simplement en passant le produit semi-fini dans un moule que l'on porte à une température suffisante pour faire apparaître le phénomène de thermofusion de tout ou partie des fibres.

L'âme peut elle-même être, au moins en partie, fibreuse.

Les dimensions d'un panneau selon l'invention peuvent être choisies très librement en fonction des domaines d'application qui peuvent être : garnitures intérieures pour l'automobile, panneaux de carrosserie pour véhicules utilitaires, pièces de carrosserie ou plates-formes de châssis pour l'automobile, panneaux pour le bâtiment, pour l'ameublement, panneaux isolants, panneaux de toiture, panneaux pour les garnitures intérieures de véhicule ferroviaires, d'avions ou de bateaux, vantaux de porte, etc. Des épaisseurs de 10mm à 150mm sont, non-limitativement, réalisables. Les matières plastiques utilisées sont, au choix, des thermoplastiques ou des thermodurcissables. La largeur des panneaux, relativement à la direction F1, peut en principe aller de 1,5 mètre, jusqu'à éventuellement 10m.

Dans tous les exemples représentés, les composants de l'âme sont de forme stable à leur entrée dans le dispositif de fabrication.

Toutefois, les différents systèmes de guidage et de soutien décrits et représentés, notamment les peignes 118, permettent d'envisager l'utilisation d'une âme ayant une certaine souplesse ou flexibilité, qui permet ensuite un moulage avec une forme complexe ou une déformation importante, par exemple pour réaliser des pièces pour l'automobile ou des éléments de forme semblablement complexe.

Il peut y avoir à l'entrée du dispositif de fabrication des moyens pour traiter au moins un composant de l'âme et/ou de l'une au moins des peaux.

## Revendications

1. Panneau composite, comprenant deux peaux fibreuses (2), et une âme (3) placée dans le volume intercalaire entre les peaux et reliée à celles-ci par une matière liante solidifiée (22), dans lequel des fibres de liaison (7) originaires de l'une au moins des peaux ont été enfoncées, en particulier perpendiculairement, dans le volume intercalaire entre les peaux, **caractérisé en ce que** certaines au moins de ces fibres s'étendent dans des évidements formés dans un constituant de l'âme, en particulier des poinçonnements (45), des usinages ou des sillons (64).

2. Panneau selon la revendication 1, **caractérisé en ce que** les fibres enfoncées (7) se trouvent le long de motifs géométriques tels que rangées, carreaux, points en quinconce.

3. Panneau selon la revendication 1 ou 2, **caractérisé en ce que** la matière liante provient de la modification au moins partielle de fibres appartenant aux peaux et/ou à l'âme.

4. Panneau selon l'une des revendications 1 à 3, **caractérisé en ce que** la matière liante (22) imprègne les peaux et, au moins en partie, les fibres enfoncées.

5. Panneau selon l'une des revendications 1 à 4, **caractérisé en ce que** les fibres enfoncées (7) forment des ponts reliant les deux peaux ensemble.

6. Panneau selon l'une des revendications 1 à 5, **caractérisé en ce que** certaines des fibres enfoncées (7) s'étendent dans des intervalles (46) notamment longitudinaux entre des éléments tels que plaques ou bandes (4) composant au moins partiellement l'âme (3).

7. Panneau selon l'une des revendications 1 à 6, **caractérisé en ce que** l'âme comprend au moins un insert (61, 62 ; 42, 43) tel qu'en particulier un insert d'ancrage pour la fixation ultérieure d'un élément sur le panneau, un renfort notamment longiligne, un conduit, un tube, un élément électrique.

8. Panneau selon l'une des revendications 1 à 7, **caractérisé en ce que** l'une au moins des peaux est multicouche (21, 24 ; 152, 157 ; 159, 153, 162).

9. Panneau selon l'une des revendications 1 à 8, **caractérisé en ce que** l'une au moins des peaux comprend un textile structuré (157, 159, 162) tel que tissu, tricot, mat préconsolidé.

10. Panneau selon l'une des revendications 1 à 9, **caractérisé en ce que** l'une au moins des peaux comprend un textile non-structuré tel que des fibres éparpillées (152, 153).

11. Panneau selon l'une des revendications 1 à 10, **caractérisé en ce que** l'une au moins (48) des faces de l'âme est conformée de façon non-plante.

12. Panneau selon l'une des revendications 1 à 11, **caractérisé par** au moins un insert (42, 43) entre l'âme et l'une des peaux.

13. Panneau selon l'une des revendications 1 à 12, **caractérisé en ce qu'**il comprend au moins deux âmes élémentaires (31) superposées, en particulier avec interposition d'une peau intérieure (32, 33).

14. Dispositif pour fabriquer un panneau selon l'une des revendications 1 à 13, **caractérisé en ce qu'**il comprend :
- des moyens d'introduction (110, 111) pour introduire une âme entre deux peaux fibreuses dans un trajet d'aiguilletage (122)
- au moins une unité d'aiguilletage (120) pour enfoncer des fibres (7) de l'une au moins des peaux de façon que certaines au moins des fibres s'étendent dans des évidements formés dans au moins un constituant de l'âme, ces évidements comprenant en particulier des poinçonnements (45), des usinages, ou des sillons (64).

15. Dispositif selon la revendication 14, **caractérisé en ce qu'**il comprend en amont du trajet d'aiguilletage (122), des moyens de préparation, en particulier des moyens de traitement de l'âme, des moyens d'usinage de l'âme et/ou des moyens (148, 151, 158, 161, 163) de confection de l'une au moins des peaux fibreuses.

16. Dispositif selon la revendication 14 ou 15, **caractérisé en ce que** les moyens d'introduction servent en même temps à introduire au moins un insert (42, 43).

17. Dispositif selon l'une des revendications 14 à 16, **caractérisé en ce que** le trajet d'aiguilletage (122) est équipé de moyens de guidage (114, 118, 171) placés entre les peaux, en particulier dans des évidements longitudinaux (47) de l'âme, en particulier entre âme et peaux, entre constituants longitudinaux individuels de l'âme, et/ou pour le guidage de l'âme, le guidage des aiguilles, et/ou le soutien de la peau.

18. Dispositif selon l'une des revendications 14 à 17, **caractérisé en ce que** l'appareillage d'aiguilletage (120) comprend des aiguilles présentant à l'extrémité de l'aiguille un évidement (128) en forme d'étoile à au moins trois branches.

19. Dispositif selon l'une des revendications 14 à 18, **caractérisé en ce que** l'unité d'aiguilletage comprend des aiguilles ayant une extrémité (131) progressivement aplatie, avec de préférence une gorge (132) dans le bord extrême de l'extrémité aplatie.

20. Procédé pour réaliser un panneau composite selon l'une des revendications 1 à 13, **caractérisé en ce que**, par aiguilletage, on enfonce des fibres (7) de l'une au moins des peaux dans le volume intercalaire, de façon que certaines au moins des fibres s'étendent dans des évidements formés dans au moins un constituant de l'âme, ces évidements comprenant en particulier des poinçonnements (45), des usinages, ou des sillons (64).

21. Procédé selon la revendication 20, **caractérisé en ce qu'**on utilise une disposition d'aiguilles et/ou un pas d'avance entre frappes successives des aiguilles de façon à réaliser un motif de sites où se concentrent les fibres enfoncées.

22. Procédé selon la revendication 20 ou 21, **caractérisé en ce qu'**on enfonce aussi des fibres (73) dans des inserts (62) de l'âme.

23. Procédé selon l'une des revendications 20 à 22, **caractérisé en ce qu'**avant l'aiguilletage on conforme au moins une face (48) de l'âme, en particulier par fraisage, découpage.

24. Procédé selon l'une des revendications 20 à 23, **caractérisé en ce qu'**on forme entre les deux peaux des ponts de fibres qui relient les deux peaux.

25. Procédé selon l'une des revendications 20 à 24, **caractérisé en ce qu'**après aiguilletage on fixe l'assemblage de l'âme et des peaux par une matière liante (22) dans un moule.

26. Procédé selon la revendication 25, **caractérisé en ce que** le moule déforme le semi-produit formé de l'âme et des peaux reliées par l'aiguilletage, en particulier grâce à des zones de déformation (46, 47) prévues dans l'âme avant aiguilletage.

## Patentansprüche

1. Verbundplatte, umfassend zwei Faseraußenschichten (2) und einen Kern (3), der in dem Zwischenraum zwischen den Außenschichten angeordnet und mit diesen durch ein verfestigtes Bindematerial (22) verbunden ist, wobei aus wenigstens einer der Außenschichten stammende Verbindungsfasern (7) insbesondere senkrecht in den Zwischenraum zwischen den Außenschichten eingezogen worden sind, **dadurch gekennzeichnet, dass** wenigstens einige dieser Fasern in Ausnehmungen, die in einem Bestandteil des Kerns ausgebildet sind, insbesondere Lochungen (45), Bearbeitungen oder Rillen (64) verlaufen.

2. Platte nach Anspruch 1, **dadurch gekennzeichnet, dass** die eingezogenen Fasern (7) sich entlang von geometrischen Mustern, wie Reihen, Karos, versetzt angeordneten Punkten befinden.

3. Platte nach Anspruch 1 oder 2, **dadurch gekennzeichnet, dass** das Bindematerial aus der wenigstens teilweisen Veränderung von zu den Außenschichten und/oder zu dem Kern gehörenden Fasern stammt.

4. Platte nach einem der Ansprüche 1 bis 3, **dadurch gekennzeichnet, dass** das Bindematerial (22) die Außenschichten und wenigstens teilweise die eingezogenen Fasern durchtränkt.

5. Platte nach einem der Ansprüche 1 bis 4, **dadurch gekennzeichnet, dass** die eingezogenen Fasern (7) Brücken bilden, welche die beiden Außenschichten miteinander verbinden.

6. Platte nach einem der Ansprüche 1 bis 5, **dadurch gekennzeichnet, dass** einige der eingezogenen Fasern (7) in Zwischenräumen, insbesondere Längszwischenräumen (46) zwischen Elementen, wie Platten oder Streifen (4), welche den Kern (3) wenigstens teilweise bilden, verlaufen.

7. Platte nach einem der Ansprüche 1 bis 6, **dadurch gekennzeichnet, dass** der Kern wenigstens einen Einsatz (61, 62; 42, 43), wie insbesondere einen Verankerungseinsatz für die spätere Befestigung eines Elements an der Platte, eine insbesondere langgezogene Verstärkung, eine Leitung, eine Röhre, eine elektrisches Element umfasst.

8. Platte nach einem der Ansprüche 1 bis 7, **dadurch gekennzeichnet, dass** wenigstens eine der Außenschichten mehrlagig (21, 24; 152, 157; 159, 153, 162) ist.

9. Platte nach einem der Ansprüche 1 bis 8, **dadurch gekennzeichnet, dass** wenigstens eine der Außenschichten eine strukturiertes Textil (157, 159, 162), wie vorverfestigte(s) Gewebe, Gewirk, Matte umfasst.

10. Platte nach einem der Ansprüche 1 bis 9, **dadurch gekennzeichnet, dass** wenigstens eine der Außenschichten ein nicht strukturiertes Textil, wie verstreute Fasern (152, 153) umfasst.

11. Platte nach einem der Ansprüche 1 bis 10, **dadurch gekennzeichnet, dass** wenigstens eine (48) der Seiten des Kerns nicht eben ausgebildet ist.

12. Platte nach einem der Ansprüche 1 bis 11, **gekennzeichnet durch** wenigstens einen Einsatz (42, 43) zwischen dem Kern und einer der Außenschichten.

13. Platte nach einem der Ansprüche 1 bis 12, **dadurch gekennzeichnet, dass** sie wenigstens zwei übereinander angeordnete Einzelkerne (31), insbesondere unter Einfügen einer Innenhaut (32, 33) umfasst.

14. Vorrichtung zur Herstellung einer Platte nach einem der Ansprüche 1 bis 13, **dadurch gekennzeichnet, dass** sie umfasst:
- Einführmittel (110, 111) zum Einführen eines Kerns zwischen zwei Faseraußenschichten auf einer Nadelungsstrecke (122),
- wenigstens eine Nadelungseinheit (120) zum Einziehen von Fasern (7) von wenigstens einer der Außenschichten, so dass wenigstens einige der Fasern in in wenigstens einem Bestandteil des Kerns ausgebildeten Ausnehmungen verlaufen, wobei diese Ausnehmungen insbesondere Lochungen (45), Bearbeitungen oder Rillen (64) umfassen.

15. Vorrichtung nach Anspruch 14, **dadurch gekennzeichnet, dass** sie vor der Nadelungsstrecke (122) Vorbereitungsmittel, insbesondere Mittel zur Behandlung des Kerns, Mittel zur Bearbeitung des Kerns und/oder Mittel (148, 151, 158, 161, 163) zur Anfertigung wenigstens einer der Faseraußenschichten umfasst.

16. Vorrichtung nach Anspruch 14 oder 15, **dadurch gekennzeichnet, dass** die Einführmittel gleichzeitig zum Einführen wenigstens eines Einsatzes (42, 43) dienen.

17. Vorrichtung nach einem der Ansprüche 14 bis 16, **dadurch gekennzeichnet, dass** die Nadelungsstrecke (122) mit Führungsmittel (114, 118, 171), die zwischen den Außenschichten, insbesondere in Längsausnehmungen (47) des Kerns, insbesondere zwischen Kern und Außenschichten, zwischen einzelnen Längsbestandteilen des Kerns angeordnet sind, und/oder für die Führung des Kerns, die Führung der Nadeln und/oder das Stützen der Außenschicht ausgestattet ist.

18. Vorrichtung nach einem der Ansprüche 14 bis 17, **dadurch gekennzeichnet, dass** das Nadelungsgerät (120) Nadeln umfasst, die am Ende der Nadel eine sternförmige Ausnehmung (128) mit wenigstens drei Schenkeln aufweist.

19. Vorrichtung nach einem der Ansprüche 14 bis 18, **dadurch gekennzeichnet, dass** die Nadelungseinheit Nadeln, die ein allmählich abgeflachtes Ende (131) aufweisen, vorzugsweise mit einer Nut (132) im äußersten Rand des abgeflachten Endes, umfasst.

20. Verfahren zur Herstellung einer Verbundplatte nach einem der Ansprüche 1 bis 13, **dadurch gekennzeichnet, dass** Fasern (7) von wenigstens einer der Außenschichten durch Nadelung in den Zwischenraum eingezogen werden, so dass wenigstens einige der Fasern in in wenigstens einem Bestandteil des Kerns ausgebildeten Ausnehmungen verlaufen, wobei diese Ausnehmungen insbesondere Lochungen (45), Bearbeitungen oder Rillen (64) umfassen.

21. Verfahren nach Anspruch 20, **dadurch gekennzeichnet, dass** eine Anordnung von Nadeln und/oder ein Vorschubschritt zwischen aufeinanderfolgenden Anschlägen der Nadeln verwendet wird, um ein Muster aus Stellen, an denen die eingezogenen Fasern konzentriert sind, auszubilden.

22. Verfahren nach Anspruch 20 oder 21, **dadurch gekennzeichnet, dass** auch Fasern (73) in Einsätze (62) des Kerns eingezogen werden.

23. Verfahren nach einem der Ansprüche 20 bis 22, **dadurch gekennzeichnet, dass** vor der Nadelung wenigstens eine Seite (48) des Kerns insbesondere durch Fräsen, Zuschneiden gestaltet wird.

24. Verfahren nach einem der Ansprüche 20 bis 23, **dadurch gekennzeichnet, dass** zwischen den beiden Außenschichten Faserbrücken, welche die beiden Außenschichten verbinden, gebildet werden.

25. Verfahren nach einem der Ansprüche 20 bis 24, **dadurch gekennzeichnet, dass** nach der Nadelung die Anordnung aus dem Kern und den Außenschichten durch ein Bindematerial (22) in einer Form fixiert wird.

26. Verfahren nach Anspruch 25, **dadurch gekennzeichnet, dass** die Form das aus dem Kern und den durch Nadelung verbundenen Außenschichten gebildete Halbzeug verformt, insbesondere dank Verformungsbereichen (46, 47), die vor der Nadelung in dem Kern vorgesehen sind.

## Claims

1. Composite panel, comprising two fibrous skins (2), and a core (3) placed in the inner volume between the skins and linked thereto by a solidified bonding material (22), in which linking fibres (7) originating from at least one of the skins have been rammed, in particular perpendicularly, into the inner volume between the skins, **characterized in that** at least some of these fibres extend into recesses formed in a constituent of the core, in particular punchings (45), machinings or grooves (64).

2. Panel according to claim 1, **characterized in that** the rammed fibres (7) are located along geometrical patterns such as rows, squares and staggered points.

3. Panel according to claim 1 or 2, **characterized in that** the bonding material originates from the at least partial modification of fibres belonging to the skins and/or to the core.

4. Panel according to one of claims 1 to 3, **characterized in that** the bonding material (22) impregnates the skins and, at least in part, the rammed fibres.

5. Panel according to one of claims 1 to 4, **characterized in that** the rammed fibres (7) form bridges linking the two skins together.

6. Panel according to one of claims 1 to 5, **characterized in that** some of the rammed fibres (7) extend into gaps (46), in particular longitudinal gaps, between components such as plates or strips (4) at least partially making up the core (3).

7. Panel according to one of claims 1 to 6, **characterized in that** the core comprises at least one insert (61, 62; 42, 43) such as in particular an anchoring insert for the subsequent fixing of a component onto the panel, a reinforcement in particular longilineal, a pipe, a tube or an electric component.

8. Panel according to one of claims 1 to 7, **characterized in that** at least one of the skins is multilayer (21, 24; 152, 157; 159, 153, 162).

9. Panel according to one of claims 1 to 8, **characterized in that** at least one of the skins comprises a structured textile (157, 159, 162) such as woven or knitted fabric, or pre-consolidated mat.

10. Panel according to one of claims 1 to 9, **characterized in that** at least one of the skins comprises a non-structured textile such as scattered fibres (152, 153).

11. Panel according to one of claims 1 to 10, **characterized in that** at least one (48) of the faces of the core is shaped in a non-flat manner.

12. Panel according to one of claims 1 to 11, **characterized by** at least one insert (42, 43) between the core and one of the skins.

13. Panel according to one of claims 1 to 12, **characterized in that** it comprises at least two superimposed core units (31), in particular with interposition of an inner skin (32, 33).

14. Device for producing a panel according to one of claims 1 to 13, **characterized in that** it comprises:
- insertion means (110, 111) for inserting a core between two fibrous skins in to a needlepunching path (122); and
- at least one needlepunching unit (120) for ramming fibres (7) from at least one of the skins so that at least some of the fibres extend into recesses formed in at least one constituent of the core, these recesses comprising in particular punchings (45), machinings or grooves (64).

15. Device according to claim 14, **characterized in that** it comprises upstream of the needlepunching path (122), preparation means, in particular core treatment means, core machining means and/or means (148, 151, 158, 161, 163) for the fabrication of at least one of the fibrous skins.

16. Device according to claim 14 or 15, **characterized in that** the insertion means serve at the same time to insert at least one insert (42, 43).

17. Device according to one of claims 14 to 16, **characterized in that** the needlepunching path (122) is equipped with guide means (114, 118, 171) placed between the skins, in particular in longitudinal recesses (47) in the core, in particular between core and skins, between individual longitudinal constituents of the core, and/or for guiding the core, guiding the needles, and/or supporting the skin.

18. Device according to one of claims 14 to 17, **characterized in that** the needlepunching equipment (120) comprises needles having at the end of the needle a recess (128) in the form of a star with at least three arms.

19. Device according to one of claims 14 to 18, **characterized in that** the needlepunching unit comprises needles having a progressively flattened end (131), with preferably a groove (132) in the extreme edge of the flattened end.

20. Method for producing a composite panel according to one of claims 1 to 13, **characterized in that**, by needlepunching, fibres (7) from at least one of the skins are rammed into the inner volume, so that at least some of the fibres extend into recesses formed in at least one constituent of the core, these recesses comprising in particular punchings (45), machinings or grooves (64).

21. Method according to claim 20, **characterized in that** an arrangement of needles and/or a feed pitch between successive strikes of the needles is used in order to produce a pattern of sites where the rammed fibres are concentrated.

22. Method according to claim 20 or 21, **characterized in that** fibres (73) are also rammed into inserts (62) in the core.

23. Method according to one of claims 20 to 22, **characterized in that** before the needlepunching at least one face (48) of the core is shaped, in particular by milling or cutting.

24. Method according to one of claims 20 to 23, **characterized in that** bridges of fibres are formed between the two skins, linking the two skins.

25. Method according to one of claims 20 to 24, **characterized in that** after needlepunching the assembly of the core and the skins is fixed by a bonding material (22) in a mould.

26. Method according to claim 25, **characterized in that** the mould distorts the semi-finished product formed by the core and the skins linked by needlepunching, in particular by means of deformation areas (46, 47) provided in the core before needlepunching.
